Europäisches Patentamt

European Patent Office

Office européen des brevets

(11) Publication number: **0 410 047 A1**

# EUROPEAN PATENT APPLICATION

(21) Application number: 89203074.3

(22) Date of filing: 05.12.89

(51) Int. Cl.5: **H02K 29/08**, H02K 1/27, G01P 3/46

(30) Priority: 28.07.89 IT 6764289

(43) Date of publication of application:
**30.01.91 Bulletin 91/05**

(84) Designated Contracting States:
**AT BE CH DE ES FR GB GR IT LI LU NL SE**

(71) Applicant: **TECHFAB MOTORI PER AUTOMAZIONE S.P.A.**
**C.so Vercelli n. 117**
**I-10015 Ivrea(IT)**

Applicant: **NICOLA S.R.L.**
**Via Monte Albergian, 11**
**I-10139 Torino(IT)**

(72) Inventor: **Colciago, Luciano**
**C.so Vittorio Emanuele II, 237**
**I-10139 Torino(IT)**

(74) Representative: **Lotti, Giorgio**
**c/o Ing. Barzanò & Zanardo Milano S.p.A. Via Cernaia 20 20**
**I-10122 Torino(IT)**

(54) Improvements to brushless tachogenerators with position sensor for brushless motors.

(57) Brushless tachogenerator with position sensor for brushless motors including a stator (10) furnished with a number of equidistant radial slots (11), each of them housing wires (12) of the rotor winding;Hall-effect sensors (16) are inserted in some of these slots (11);inside the stator (10) a multipolar magnetic ring (14) is mounted and can rotate freely; it is made of isotropic material and is coaxially splined to the rotor shaft (18).

FIG.1

EP 0 410 047 A1

## IMPROVEMENTS TO BRUSHLESS TACHOGENERATORS WITH POSITION SENSOR FOR BRUSHLESS MOTORS

The invention refers to brushless tachogenerators with a position sensor for brushless motors.

Fundamentally brushless tachogenerators with a position sensor for brushless motors consist of a permanently magnetized rotor with a magnetic field moving radially and consisting of various poles fixed one by one to the rotating shaft of the tachogenerator; the whole rotates inside a segmented stator , the slots of which house the wires of the rotor winding. The device also includes a disk supporting Hall-effect magnetic sensors and is positioned statically and coaxially to the stator. The sensors are excited by a second permanently magnetized rotor, synchronously with the tensions induced on the windings of the tachogenerator. It is easily understood that this device, with all parts and details forming it, is extremely complicated and costly in that it requires highly precise calibrations , which often need frequent upkeep.

The aim of the invention is to propose an extremely simple tachogenerator, which would therefore cost much less and would bè highly reliable even after a long time. To this purpose and others, which will be better understood later on, the invention proposes a brushless tachogenerator with a position sensor for brushless motors characterized by the fact of including a stator with a certain number of equidistant radial slots, each of them housing the wires of the rotor winding; Hall-effect sensors being inserted in some of said slots ; inside the stator a single multipolar magnetic ring is mounted and can rotate freely; the magnetic ring is made of isotropic material and is splined to the rotor shaft coaxially to the rotor.

The tachogenerator proposed by the invention is described referring to the enclosed drawings as follows:

Fig,.1 schematically illustrates the tachogenerator proposed by the invention;

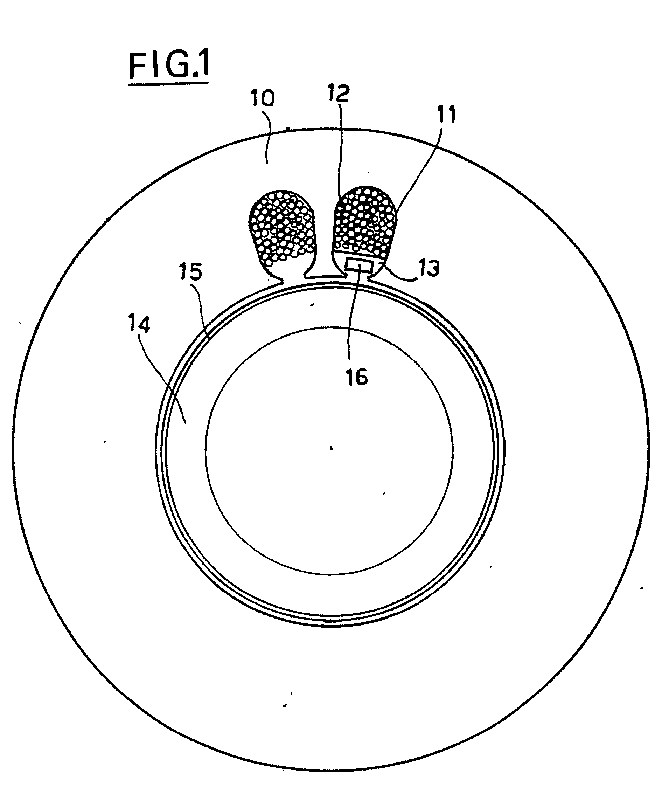

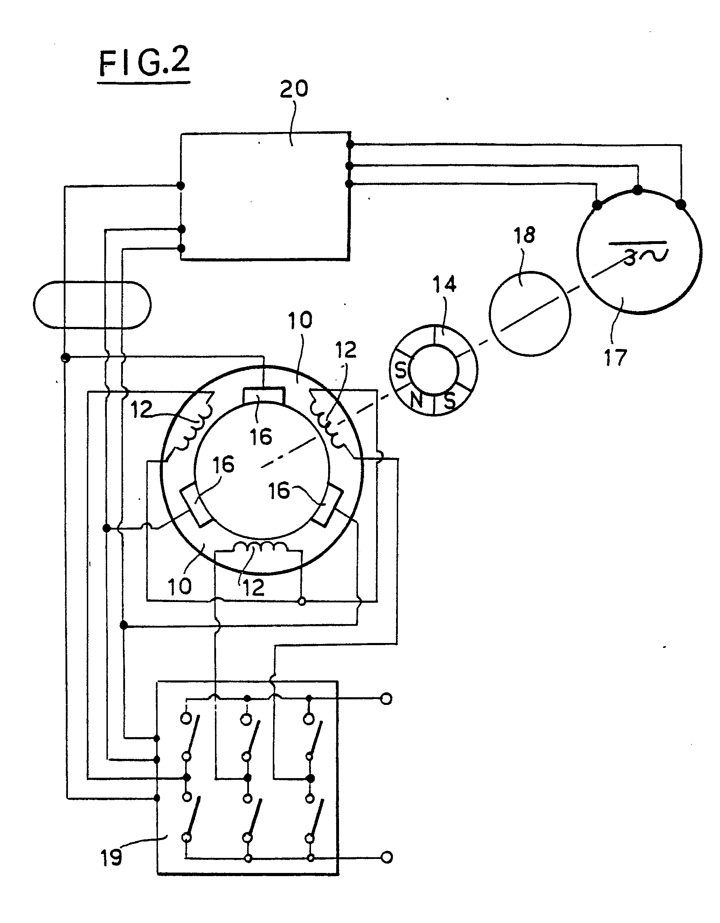

Fig.2 schematically illustrates an application of the tachogenerator as per fig.1 on a brushless motor.

Fig.1 shows a stator (10) furnished with a certain number of radial slots, equidistant on the inner circumference of the stator (only two have been showed to obtain a simpler drawing).

Each slot houses wires (12) of the rotor winding ; a few slots also house Hall-effect sensors (16) as well as magnetic plates in a conducting material(13) which focus the magnetic field on sensor 12 without altering the main magnetic field on the tachogenerator windings.

Inside stator 10 there is an isotropic multipolar magnetic ring 14 on which a ring diffuser 15 made of a magnetic conducting material is wound.

Therefore, for what the structure of the traditional tachogenerator is concerned, the rotor exciting the Hall- effect sensors has been removed and the sensors have been placed in the same slots 11 where wires 12 of the rotor winding are housed, and are excited by the same permanently magnetized rotor which is used to produce the magnetic field of the tachogenerator.

Moreover, the multipolar rotor for the excitation has been replaced by a single isotropic magnetic ring 14 which permits to obtain the multipolar magnetization of a single magnetic ring; the radiality of the magnetic field thus produced, is improved by the second ring diffuser made of magnetic conducting material through which the magnetic force is evenly distributed to the whole surface of each magnetic pole.

Fig.2 shows an application of the tachogenerator now described on a motor 17 , rotor 18 of which is splined to the same shaft to which ring 14 of the tachogenerator is also splined.

Six switches 19 (electronic switches even if only schematized in fig.2) are piloted by Hall-effect sensors to obtain a signal according to the speed and direction of rotation of the shaft to which ring 14 is splined . The switches close synchronously according to the position of the ring.

Similarly block 20 includes as many switches, closing synchronously according to the position of rotor 18 of motor 17, splined coaxially with rotor (ring) 14 of the tachogenerator.

The evident advantages resulting of this realization are the following:

No timing is required between sensors 16 and windings 12 of the tachogenerator in that the sensors are positioned inside slots 11 containing them.

Timing is much easier between sensors 16 and the windings of motor 17 in that to this purpose it is enough to make stator 10 rotate with built-in sensors.

Finally, there are less components than in traditional tachogenerators, resulting in a reduction of assembly times, in a significant reduction of costs and in a greater repeatability of the generator parameters thanks to more simple components.

## Claims

1. Brushless tachogenerator, with position sensor for brushless motors characterized by the fact of including a stator (10) with a certain number of equidistant radial slots (11) each of them housing the wires (12) of the rotor winding;. Hall-effect sensors (16) being inserted in some of said slots (11); inside the stator (10) a multipolar magnetic ring (14) is mounted and can rotate freely; the magnetic ring (14) is made of isotropic material and is splined to the rotor shaft coaxially to rotor (18).

2. Generator as per claim 1 characterized by the fact that besides Hall-effect sensors (16) also magnetic plates (13) in conducting material are mounted to focus the magnetic field on the relevant sensor.

3.Generator as per claim 1 characterized by the fact that a diffusing ring (15) made of magnetic conducting material is wound on the single multipolar magnetic ring (14).

# FIG.1

# FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN vol. 7, no. 226 (E-202)(1371) 7 October 1983, & JP-A-58 116057 (FUJI) 11 July 1983, * the whole document * | 1,2 | H 02 K 29/08 H 02 K 1/27 G 01 P 3/46 |
| Y | EP-A-0 023 123 (FUJITSU FANUC) * page 3, lines 5 - 31 * * page 5, line 30 - page 6, line 4; figure 4 * | 1,2 | |
| A | PATENT ABSTRACTS OF JAPAN vol. 4, no. 67 (E-11)(549) 20 May 1980, & JP-A-55 34802 (FUJITSU) 11 March 1980, * the whole document * | 3 | |
| A | FR-A-1 166 984 (CONSOLIDATED ELECTRONICS INDUSTRIES) * page 3, right-hand column, lines 31 - 40; figure 3 * | 1 | |

| | |
|---|---|
| | TECHNICAL FIELDS SEARCHED (Int. Cl.5) |
| | H 02 K G 01 P |

The present search report has been drawn up for all claims

| Place of search | Date of completion of search | Examiner |
|---|---|---|
| The Hague | 31 October 90 | ZANICHELLI F. |